# EUROPEAN PATENT APPLICATION

(11) **EP 0 613 277 A1**
(43) Date of publication of application: **31.08.1994**
(21) Application number: 94301060.3
(22) Date of filing: 14.02.1994
(51) Int. Cl.: H04M 3/00

(54) **Programmable signalling buttons**

(30) Priority: 22.02.1993 GB 9303521
(71) Applicant: GPT LIMITED, Coventry, CV3 1HJ (GB)
(72) Inventor: Cheetham, Robert, Chester, CH3 5TT (GB); Thornton, Nigel David, West Kirby, Wirral, Merseyside, LA8 4HA (GB); Franks, Timothy John, Warrington, Cheshire (GB)
(74) Representative: Branfield, Henry Anthony

(57) **Abstract**

A range of supplementary services are currently provided by telecommunication network operators which it is only possible to obtain by sending a sequence of digits to the exchange.

A telecommunications network has control means for providing one or more supplementary services to Customer's Premises Equipment (CPE) units connected to the network, one or more CPE units including programmable buttons (9), the operation of a button causing the transmission of a defined code to an exchange forming part of the network to access a supplementary service, there being programming means to programme the programmable buttons.

The programming means may be means to transmit programming signals from the exchange to a CPE unit using Frequency Shift Keying (FSK) (2) signalling.

Alternatively, the programming means may be a smartcard and a card reader connectable to the CPE unit, the smartcard being encoded with the programming information to programme the CPE unit.

## Description

A range of supplementary services are currently provided by telecommunication network operators and it is likely that the range available will increase.

Examples of the services which are or will become available are:-
Call Waiting
Call Diversion
Charge Advice
Three-party Call
Call Back When Free
Call Trace - indicates to exchange that a malicious call has been received and holds the call to enable the source to be traced.
Return Last Call Received
Query Last Call Received Contents - provides a display or spoken record of the source of the last call received.

At present it is only possible to obtain the above services by sending a sequence of digits to the exchange. One way of encouraging subscribers to use the services is to simplify the operating process.

The simplification proposed is to reduce the number of buttons that require to be pressed to operate a service, preferably to a single button, and to provide a facility for programming the buttons. The buttons could be similar to the stored memory buttons currently found on some telephone units. The facility could be provided for a range of Customer's Premises Equipment (CPE), but the most likely use is with a telephone.

According to the present invention there is provided a telecommunications network comprising control means for providing one or more supplementary services to Customer's Premises Equipment (CPE) units connected thereto, wherein one or more CPE units include programmable buttons, whereby the operation of a button causes the transmission of a defined code to an exchange forming part of the network to access a supplementary service, further comprising programming means to programme the programmable buttons.

The programmable means may comprise means to transmit programming signals from the exchange to a CPE unit using Frequency Shift Keying (FSK) signalling.

Alternatively, the programming means may comprise a smartcard and a card reader connectable to the CPE unit, the smartcard being encoded with the programming information to programme the CPE unit.

The present invention will now be described by way of example, with reference to the accompanying drawings, in which:-
Figures 1(a), 1(b), 1(c) and 1(d) show the sequence of operation for obtaining two typical supplementary services and the programmable button equivalents;
Figure 2 is a block diagram illustrating the programming procedure using FSK signalling; and
Figure 3 is a block diagram illustrating the programming procedure using a smartcard.

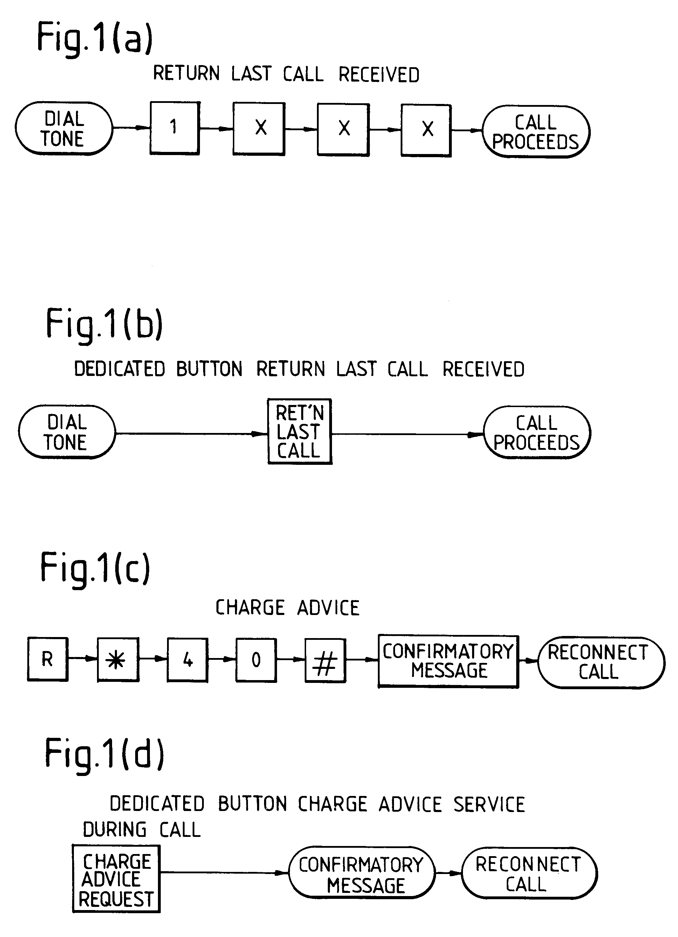

In Figure 1(a) is shown the normal user sequence which would be used for the "Return Last Call Received" service, which typically would involve lifting the telephone handset, waiting for a dialling tone and entering a series of digits "1-X-X-X", these digits being those necessary to obtain the service. The exchange would then initiate a connection to the last caller. Figure 1(b) then illustrates the replacement programmed option.

Figure 1(c) shows the initiation of a request for "Charge Advice" during a call. As a call is already in progress it is necessary to use the "Recall" button to initiate the procedure. The sequence " * 40 # " is then entered, which should result in a confirmatory message from the exchange and the call is then reconnected. Figure 1(d) shows the replacement programmed option.

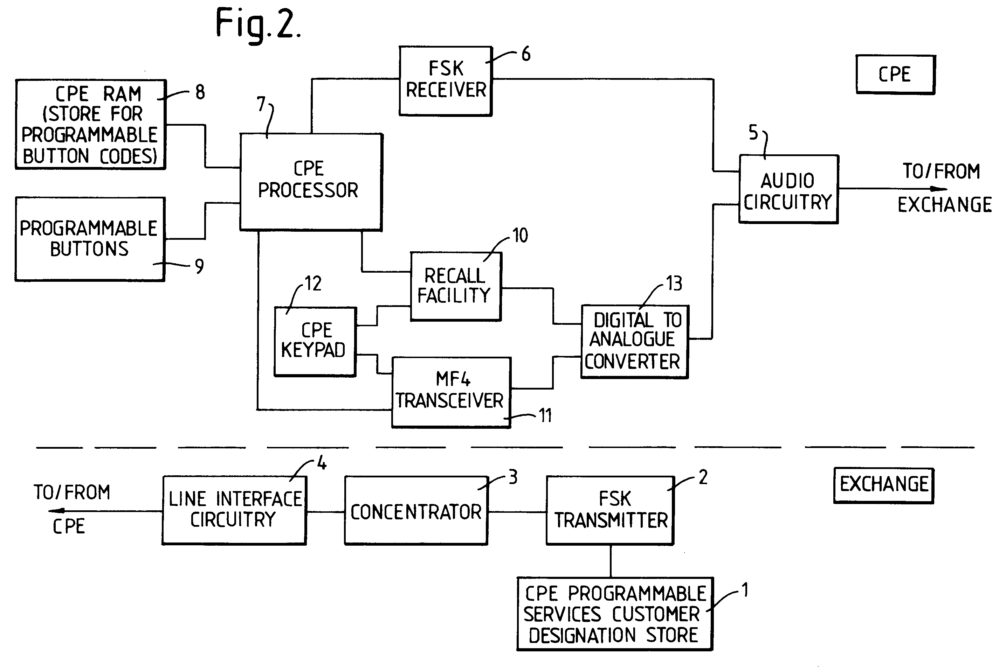

In Figure 2 is shown a block diagram of a CPE and an exchange where the exchange has provision for programming the buttons on the CPE using FSK signalling.

Within the exchange is a CPE Programmable Services Customer Designation Store 1, which is linked to an FSK transmitter 2 and then to a concentrator 3 connected to line interface circuitry 4. When it is required to programme a CPE, the programming data is supplied from the store 1 and encoded into FSK signals which are sent to a CPE via the concentrator 3 and the line interface circuitry 4.

The CPE has the usual audio circuitry 5 connected to the exchange. The FSK signals from the exchange are then connected to an FSK receiver 6 where they are decoded and passed to a CPE processor 7, when they are stored in a CPE random access memory (RAM) 8.

The programmable buttons 9 are connected to the processor 7 and operation of a button causes the processor 7 to obtain the necessary code from the RAM 8. Signals from the processor 7 are passed to the recall facility 10 and the MF4 transceiver 11, MF4 being the standard for multi-frequency tones for telecommunications. A CPE keypad 12 is also connected to the recall facility 10 and the transceiver 11.

The recall facility 10 and the transceiver 11 are connected to an analogue to digital converter 13, to the audio circuitry 5 and thence to the exchange line.

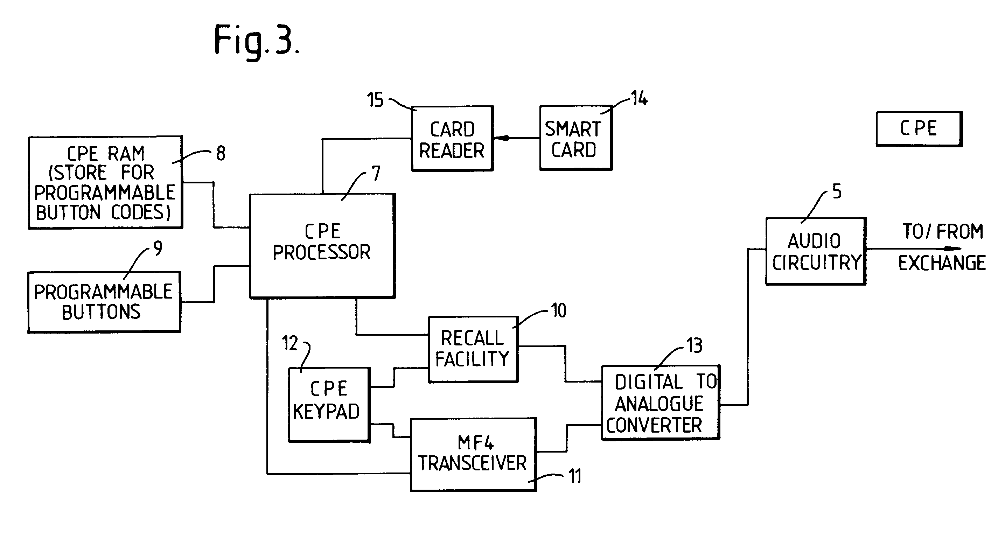

Figure 3 shows a smartcard encodable version of the invention, the exchange in this case not being changed to function with the invention and consequently not being shown.

The CPE processor 7, the CPE RAM 8, the programmable buttons 9, the recall facility 10, the MF4 transceiver 11, the CPE keypad 12 and the digital to analogue converter 13 are generally as shown in the Figure 2 embodiment. The audio circuitry 5 does not connect in this case to an FSK receiver.

The programming is carried by a smartcard 14 encoded with the programme which is read by a card reader 15 providing an input to the processor 7.

In each embodiment the CPE described may be part of a telephone or a separate unit.

The smartcard would need to have read-only memory.

## Claims

1. A telecommunications network comprising control means for providing one or more supplementary services to Customer's Premises Equipment (CPE) units connected thereto, wherein one or more CPE units include programmable buttons, whereby the operation of a button causes the transmission of a defined code to an exchange forming part of the network to access a supplementary service, further comprising programming means to programme the programmable buttons.

2. A network as claimed in Claim 1, wherein the programming means comprises means to transmit programming signals from the exchange to a CPE unit using Frequency Shift Keying (FSK) signalling.

3. A network as claimed in Claim 1, wherein the programming means comprises a smartcard and a card reader connectable to the CPE unit, the smartcard being encoded with the programming information to programme the CPE unit.

4. A CPE unit including a card reader and arranged for programming as part of a network as claimed in any preceding claim.
